# EUROPEAN PATENT SPECIFICATION

(11) **EP 3 898 096 B1**
(45) Date of publication and mention of the grant of the patent: **23.10.2024**
(21) Application number: 19835750.1
(22) Date of filing: 16.12.2019
(51) Int. Cl.: B29C 64/165, B29C 64/205, B29C 64/314, B33Y 40/20, B33Y 70/00, B33Y 70/10, B33Y 80/00, B24D 11/00, B24D 18/00, B33Y 10/00, B33Y 30/00

(54) **MACHINE FOR THE PRODUCTION OF ABRASIVE WHEELS AND METHOD FOR FORMING AN ABRASIVE WEEL**
MACHINE ZUR HERSTELLUNG VON SCHLEIFSCHEIBEN UND VERFAHREN ZUR HERSTELLUNG EINER SCHLEIFSCHEIBE
MACHINE POUR LA FABRICATION D'ARTICLES ABRASIFS ET PROCÉDÉS DE FABRICATION

(30) Priority: 18.12.2018 US 201862780953 P
(43) Date of publication of application: 27.10.2021
(73) Proprietor: 3M Innovative Properties Company, Saint Paul, Minnesota 55133-3427 (US)
(72) Inventor: GIVOT, Maiken, Saint Paul, Minnesota 55133-3427 (US); MEDVED, Aleksander, Saint Paul, Minnesota 55133-3427 (US); WESTBERG, Fredrik K.G., 191 89 Sollentuna (SE); BEIERMANN, Brett A., Saint Paul, Minnesota 55133-3427 (US); CLARK, Rachel J., Saint Paul, Minnesota 55133-3427 (US); SKEPP, Torbjörn N., 191 89 Sollentuna (SE); RIFAUT, Jean-Luc, 1831 Deigem (BE); SCHUMACHER, Knut, 41453 Neuss (DE); REMHOF, Tilo, 41453 Neuss (DE)
(74) Representative: De Clercq & Partners
(86) International application number: PCT/IB2019/060840
(87) International publication number: WO 2020/128779

(56) References cited:
- WO-A1-2017/066077
- CN-A- 101 186 031
- CN-A- 105 415 216
- US-B2- 7 632 434

## Description

### BACKGROUND

The present disclosure relates to bonded abrasive articles. Bonded abrasive wheels have been made using conventional methods such as pressure-based molding. Bonded abrasive articles can have a vitreous, polymer or metal-based bond and can include wheels of varying sizes for different abrasive applications. US 7 632 434 B2 discloses an abrasive wheel maker apparatus and method according to the preambles of claims 1 and 8 respectively.

### BRIEF DESCRIPTION OF THE FIGURES

The drawings illustrate generally, by way of example, but not by way of limitation, various embodiments of the present invention, which is defined by the claims.
FIGs. 1A-1B are profile and overhead views of a first continuous single layer manufacturing device, not covered by the scope of the present invention.
FIGs. 2A-2B are profile and overhead views of a second continuous single layer manufacturing device, not covered by the scope of the present invention.
FIG. 3 is a perspective view of a binder leveling device.
FIGs. 4A-4B are sectional views of a continuous single layer manufacturing abrasive article which can be manufactured with a device or a method according to the present invention.
FIG. 5 is perspective diagram showing a spiral abrasive placement substrate article, which can be manufactured with a device or a method according to the present invention.
FIGS. 6A-6B are perspective diagrams showing a wavy spiral abrasive placement substrate articles, which can be manufactured with a device or a method according to the present invention.
FIGS. 7A and 7B illustrate a platform for continuous additive manufacturing of an abrasive product, according to the invention.
FIGS. 8A-8C illustrates a platform for continuous additive manufacturing of an abrasive product, according to the invention.
FIGS. 9A and 9B illustrate example arrangements of printed abrasive articles, which can be manufactured with a device or method according to the present invention.
FIG. 10 illustrates a block diagram of a continuous printer.
FIG. 11 illustrates a method of manufacturing an abrasive according to the invention.

### DETAILED DESCRIPTION

Reference will now be made in detail to certain embodiments of the disclosed subject matter, examples of which are illustrated in part in the accompanying drawings. The scope of the invention is defined by the claims.

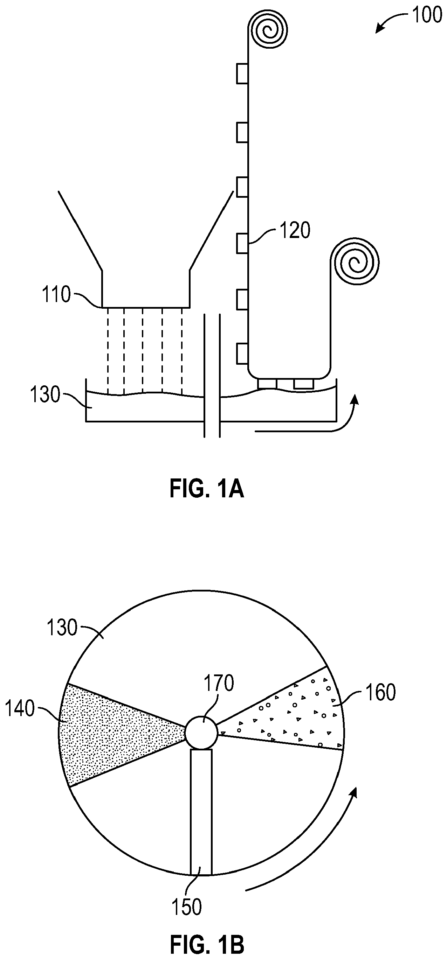

FIGs. 1A-1B are profile and overhead views of a first continuous single layer manufacturing device 100. FIG. 1A shows a profile view of the first continuous single layer manufacturing device 100. Manufacturing device 100 includes a binder hopper 110 for dispensing a binder precursor onto a wheel substrate 130. The binder precursor may include a resin binder, a ceramic binder, or a metal binder. The binder hopper 110 may also dispense grinding aids, pore formers, secondary grains, fillers, or other materials. In some embodiments, the binder precursor may be distributed using a continuous band (e.g., tape) of plasticized resin (not shown), such as described in WO 2016/064726 A1. Reinforcement materials may also be dispensed by the binder hopper 110 or by another device (not shown), where the reinforcement materials may include chopped fibers, partial scrim, full scrims, or other reinforcement materials. Manufacturing device 100 may include an abrasive dispenser 120 for dispensing an abrasive onto the wheel substrate 130. The dispensed abrasive may include precision shaped minerals, elongated crushed abrasive, extruded abrasive, vitrified agglomerates, resin bond agglomerates, crushed abrasive, or other abrasive. The abrasive dispenser 120 may be used to place the abrasive at predetermined positions or in predetermined orientations within specific circular segments of the wheel substrate, such as shown in FIG. 1B.

FIG. 1B shows an overhead view of the first continuous single layer manufacturing device 100. The binder hopper 110 shown in FIG. 1A may dispense the binder precursor onto a binder circular section 140 of the wheel substrate 130. Manufacturing device 100 may include a leveling device 150, which may be used to level and distribute the binder precursor 140 across the radius of the wheel substrate 130. The leveling device 150 may include a leveling blade, a leveling fork, or other leveling structure. The abrasive dispenser 120 shown in FIG. 1A may dispense the abrasive onto an abrasive circular section 160 of the wheel substrate 130. A recess pressing device (not shown) may be used to push recesses into the leveled binder precursor, and the recesses may be used to receive the dispensed abrasive. An abrasive pressing device (not shown) may be used to press the dispensed abrasive into the leveled binder precursor.

The wheel substrate 130 may rotate while the binder precursor and abrasive are dispensed. For example, the wheel substrate 130 show in FIG. 1B may be rotated counterclockwise, such that additional binder is dispensed over the abrasive on subsequent rotations, the additional binder is leveled, and additional abrasive is placed on the additional binder. This process may continue, forming a continuous spiral layer of binder and abrasive particles. In an example, wheel substrate 130 may include an inclined wheel substrate rotating around a vertical central bore axis 170, where the inclined wheel plane may be offset from a horizontal plane relative to the vertical central bore axis 170 to aid in formation of the spiral layer of binder and abrasive particles. In another example, the wheel substrate 130 includes an initial deposit of binder, wherein the initial binder deposit provides an initial ramp to aid in formation of the spiral layer of binder and abrasive particles. The spiraling building of abrasive articles on the inclined wheel may be used to form a cylindrical body that includes a continuous spiral-shaped abrasive layer.

The spiral layers of binder and abrasive particles may be pressed or cured following deposition of all spiral layers, or each layer may be cured as the wheel substrate 130 rotates. The curing may include temporary (e.g., intermediate) curing or final curing, and may include infrared (IR) heating, ultraviolet (UV) curing, microwave curing, use of two-component curing materials (e.g., hardening as a function of time), or other curing materials. While FIG. 1B shows the binder circular section 140 opposite from the abrasive circular section 160 of the wheel substrate 130, other configurations may be used. For example, the binder circular section 140 and the abrasive circular section 160 may be on a first half of the wheel substrate 130, the wheel may be rotated 180°, and the dispensing process repeated.

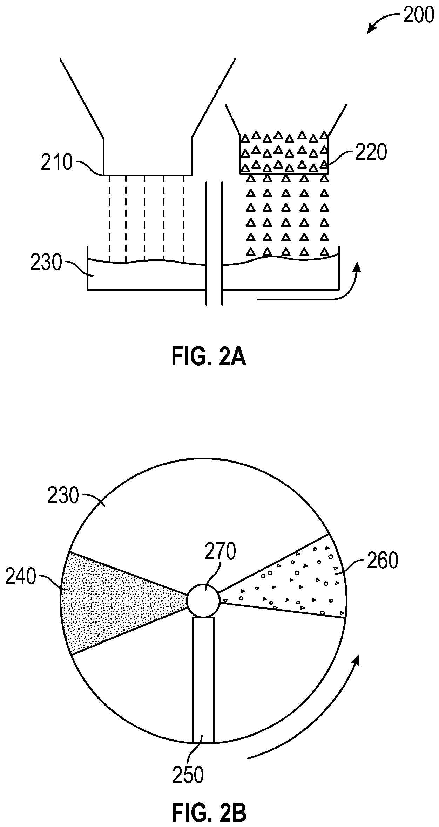

FIGs. 2A-2B are profile and overhead views of a second continuous single layer manufacturing device. FIG. 2A shows a profile view of the second continuous single layer manufacturing device 200. Manufacturing device 200 includes a binder hopper 210 for dispensing a binder precursor onto a wheel substrate 230. Manufacturing device 200 may also include an abrasive hopper 220 for dispensing an abrasive onto the wheel substrate 230. The abrasive hopper 220 may include a very narrow gap across the radius of the wheel substrate 230 to dispense a continuous monolayer of abrasive material.

FIG. 2B shows an overhead view of the second continuous single layer manufacturing device 200. The binder hopper 210 shown in FIG. 2A may dispense the binder precursor onto a binder circular section 240 of the wheel substrate 230. Leveling device 250 may be used to level and distribute the binder precursor 240 across the radius of the wheel substrate 230. The abrasive dispenser 220 shown in FIG. 2A may dispense the abrasive onto an abrasive circular section 260 of the wheel substrate 230. A sectional mask may be used below binder hoper 210 or abrasive hoper 220 to aid in placement of the binder or mineral in their respective binder circular section 240 and abrasive circular section 260.

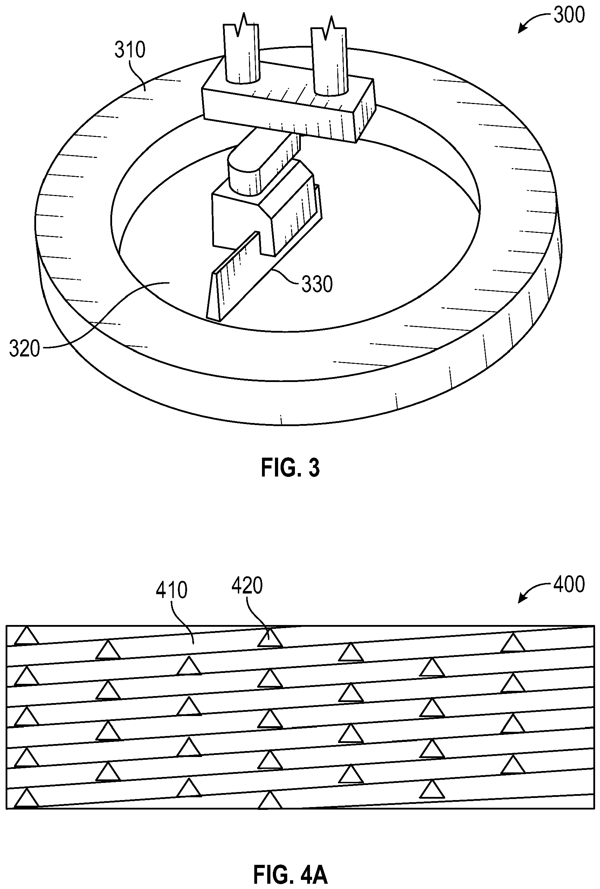

FIG. 3 is a perspective view of a binder leveling device 300. Binder leveling device 300 may include a wheel mold 310 into which binder 320 is deposited. The binder may be deposited into the wheel mold 310 using one or more hoppers or placement devices. In an embodiment, an abrasive mixture is deposited, where the abrasive mixture includes both binder and abrasive. The abrasive mixture may further include grinding aids, pore formers, fillers, reinforcement materials, or other materials. In an embodiment, the abrasive may be placed in predetermined positions or predetermined orientations subsequent to leveling, such as by an abrasive placement device (not shown).

A leveler 330 may be used to level the binder. While the leveler 330 shown in FIG. 3 includes a blade leveler, a fork or other leveling device may be used. The leveler 330 may be used to adjust the density of the binder or abrasive, such as by modifying the mounting angle of a leveling blade. The density or composition of the binder or abrasive may be modified by using one or more hoppers or placement devices to modify the number of binder or abrasive particles per unit area. The density or composition of the binder or abrasive may be modified by using multiple hoppers or placement devices to deposit different types of binders or abrasives. The density or composition of the binder or abrasive may be selected to provide uniform removal of the material to be ground by the grinding wheel. In an embodiment, a first binder and abrasive are deposited in a first region of the wheel mold 310, and a second binder and abrasive are deposited in a second region of the wheel mold 310. The use of two or more regions of binder or abrasive may be useful in providing regions with different properties, such as differing abrasive regions for face-grinding or edge-grinding applications. Once the wheel mold 310 is filled and leveled to form a continuous spiral abrasive layer of binder and abrasive particles, the resulting spiral abrasive layer may be pressed and cured. Scrims may be placed on the inside or outside of the continuous spiral abrasive layer to provide additional reinforcement.

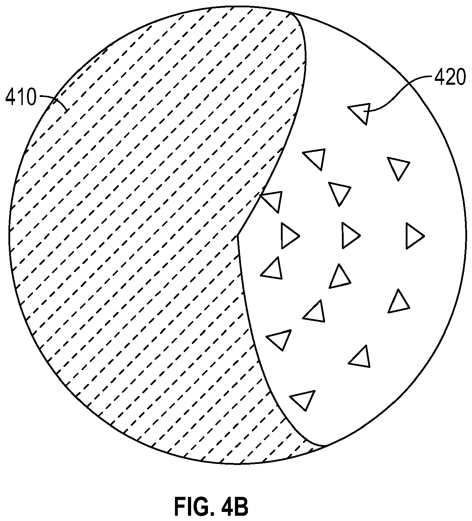

FIGs. 4A-4B are sectional views of a continuous single layer manufacturing abrasive article 400. FIG. 4A shows a vertically cut spiral cross-section of the continuous spiral abrasive layer, and FIG. 4B shows a horizontally cut spiral cross-section. The cross-section may include binder 410 and abrasive 420. The continuous spiral abrasive layer provides various advantages, including providing abrasive 420 that are uncovered at varying times during the lifetime of the abrasive wheel. For example, in contrast with a horizontal layer that may include minimal abrasive at the boundary of each layer, the continuous spiral abrasive layer would expose different portions of each abrasive 420 as the wheel is ground away.

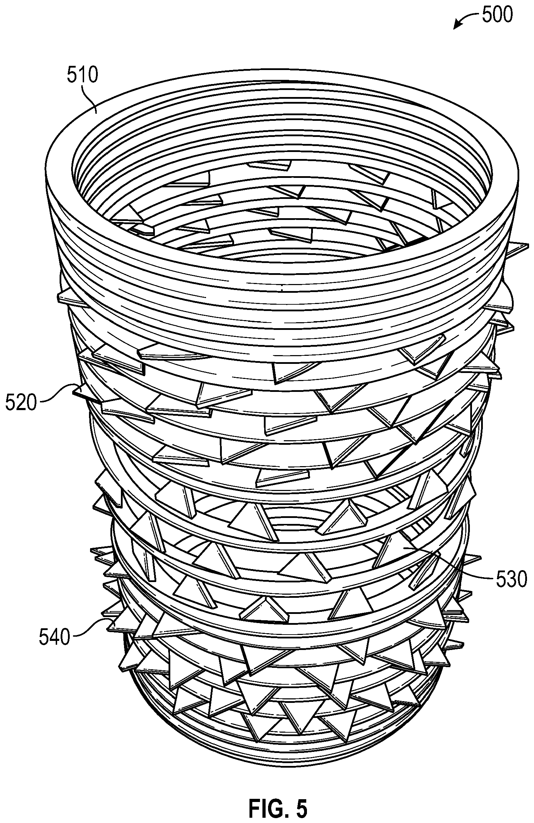

FIG. 4B shows an example placement of the abrasive 420. The abrasive 420 may be placed using various techniques. The abrasive may be placed into predetermined locations or in predetermined orientations using an abrasive placement device (e.g., a "pick- and-place" device). The orientation of the abrasive may be selected or modified by coating the abrasive with a magnetically responsive coating or by placing such magnetically responsive particles inside an agglomerate. A magnetic field may be used to orient the mineral or agglomerate in the desired direction. The abrasive may be blended into the binder precursor material and subsequently oriented using magnets or other magnetic field, such as by using a plurality of magnets placed near the outer circumference or upper surface of the wheel. Magnetically responsive materials and abrasive placement devices are described further below. The abrasive may be placed in a predetermined pattern on a carrier film and deposited onto the leveled binder precursor surface. The abrasive may be affixed in a predetermined pattern on a carrier structure placed within the leveled binder precursor, such as the spiral carrier structure shown in FIG. 5.

FIG. 5 is perspective diagram showing a spiral abrasive placement substrate article 500. The spiral abrasive placement substrate article 500 may include a helical abrasive substrate 510 to aid in orientation and placement of abrasive particles. The helical abrasive substrate 510 may include a plurality of abrasive particles in predetermined orientations or preterminal positions, and helical abrasive substrate 510 may be placed on the leveled binder during formation of the continuous spiral abrasive layer. For example, the helical abrasive substrate 510 may include a spirally oriented abrasive 520, where the spirally oriented abrasive 520 is oriented substantially in the circular cutting direction of the wheel (e.g., perpendicular to the radius), such as for cylindrical grinding applications. The helical abrasive substrate 510 may include a vertically oriented abrasive 530, where the vertically oriented abrasive 530 may be oriented substantially upward or downward relative to the helical abrasive substrate 510, such as for face-grinding applications. Though the vertically oriented abrasive 530 include abrasive plates oriented perpendicular to the radius, vertical abrasive plates may be oriented parallel or in other orientations relative to the radius. The helical abrasive substrate 510 may include a radially oriented abrasive 540, where the radially oriented abrasive 540 may be oriented substantially parallel to the radius, such as for cylindrical grinding or cutting wheel applications.

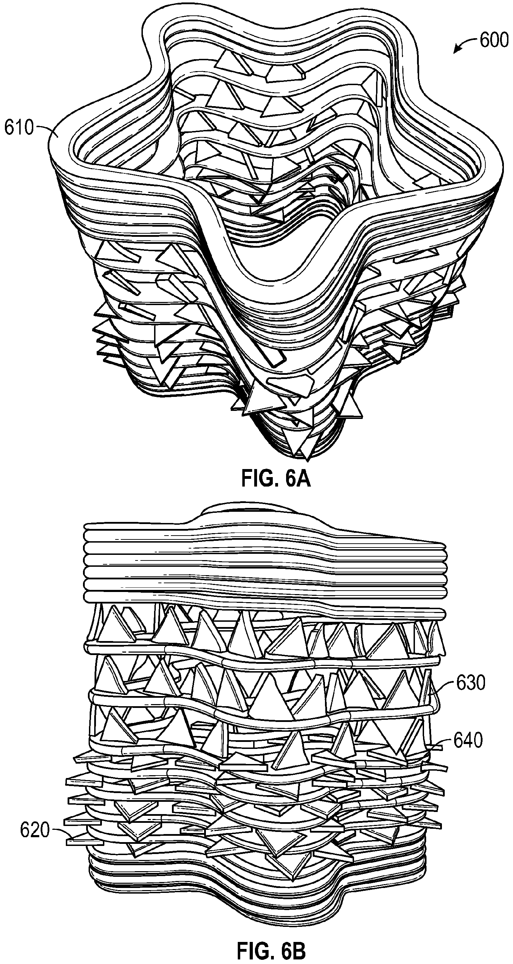

The helical substrate 510 may include one or more helical strands, such as a double helix or other helical structure. Abrasive particles may be affixed to one or more surfaces of the helical substrate 510, such as including vertical abrasive 530 on both the upper and lower surfaces of the helical substrate 510. The helical substrate 510 may include a thin substrate to reduce or minimize the volume of the substrate, and may include a sacrificial tape, a functional mesh (e.g., fiber mesh, ceramic mesh, metal mesh, paper mesh), or other thin substrate. The helical substrate 510 may include a circular horizontal cross-section as shown in FIG. 5, or may include a star-shaped horizontal cross-section, an oscillating (e.g., wavy) circular horizontal cross-section shown in FIGs. 6A-6B, or other horizontal cross-section shape.

FIGs. 6A-6B are perspective diagrams showing a wavy spiral abrasive placement substrate article. The spiral abrasive placement substrate article 600 may include a wavy helical abrasive substrate 610 to aid in orientation and placement of abrasive particles. The wavy helical abrasive substrate 610 may include a plurality of abrasive particles in predetermined orientations or preterminal positions, and wavy helical abrasive substrate 610 may be placed on the leveled binder during formation of the continuous spiral abrasive layer. For example, the wavy helical abrasive substrate 610 may include a spirally oriented abrasive 620, where the spirally oriented abrasive 620 is oriented substantially in the circular cutting direction of the wheel (e.g., perpendicular to the radius), such as for cylindrical grinding applications. The wavy helical abrasive substrate 610 may include a vertically oriented abrasive 630, where the vertically oriented abrasive 630 may be oriented substantially upward or downward relative to the wavy helical abrasive substrate 610, such as for face-grinding applications. Though the vertically oriented abrasive 630 include abrasive plates oriented perpendicular to the radius, vertical abrasive plates may be oriented parallel or in other orientations relative to the radius. The wavy helical abrasive substrate 610 may include a radially oriented abrasive 640, where the radially oriented abrasive 640 may be oriented substantially parallel to the radius, such as for cylindrical grinding or cutting wheel applications. The wavy helical substrate 610 may include one or more helical strands, such as a double helix or other helical structure. Abrasive particles may be affixed to one or more surfaces of the wavy helical substrate 610, such as including vertical abrasive 630 on both the upper and lower surfaces of the helical substrate 610. The wavy helical substrate 610 may include a thin substrate to reduce or minimize the volume of the substrate, and may include a sacrificial tape, a functional mesh (e.g., fiber mesh, ceramic mesh, metal mesh, paper mesh), or other thin substrate.

In creating the part layer by layer, one of the challenges is the time needed to build each layer, reducing the range of potential products that are cost effective.

Described herein is a 3D-printing continuous process, where all the steps are done together at the same time. This can reduce the layer building time by more than half and increase the throughput of the printer. Additionally, several parts can be made simultaneously on the same workspace, further reducing a per-part time to manufacture. While the discussion below focusses on powder bed binder jetting, other additive manufacturing techniques, such as powder bed fusion, may also be implemented using systems and methods described herein.

Powder bed binder jetting is a process where a thin layer of a powder is spread out evenly and then is partially bonded at desired locations by a liquid binder mixture. Typically, that binder mixture is dispensed by an inkjet print head and consists of a polymer dissolved in a suitable solvent or carrier solution. The role of the binder is to fix each particle in place, keeping the homogeneity of the mixture and forming the expected shape of the final article in a layer-by-layer process. The first layer then is at least partially dried and lowered so that a next powder layer is spread. The powder spreading, layer levelling, bonding and setting processes can be repeated until the full object is created. These 4 steps are usually done sequentially for a given abrasive layer.

The abrasive article precursor and surrounding powder is removed from the printer and often dried or cured to impart additional strength so that the now hardened object can be extracted from the surrounding powder.

In some cases, the powder in the object can be in a matrix form so that another material can be infused or infiltrated in a subsequent step to create a fully dense obj ect.

The time needed for each different step is highly dependent on the abrasive mixture being printed. A highly flowable powder can be spread and levelled much faster than a mixture having a poor flowability behavior. A highly conductive powder can be heated and dried faster than a refractory or ceramic material. Printing time is usually driven by the abrasive mixture but also by the precision needed for the final abrasive product. The precision needed determines the thickness possible for each abrasive layer. Printing time can also increase depending on the needed strength to handle the printed part before a final consolidation step.

### Shaped Abrasive Particles

As used herein "shaped abrasive particle" means an abrasive particle having a predetermined or non-random shape. One process to make a shaped abrasive particle such as a shaped ceramic abrasive particle includes shaping the precursor ceramic abrasive particle in a mold having a predetermined shape to make ceramic shaped abrasive particles. Ceramic shaped abrasive particles, formed in a mold, are one species in the genus of shaped ceramic abrasive particles. Other processes to make other species of shaped ceramic abrasive particles include extruding the precursor ceramic abrasive particle through an orifice having a predetermined shape, printing the precursor ceramic abrasive particle though an opening in a printing screen having a predetermined shape, or embossing the precursor ceramic abrasive particle into a predetermined shape or pattern. In other examples, the shaped ceramic abrasive particles can be cut from a sheet into individual particles. Examples of suitable cutting methods include mechanical cutting, laser cutting, or water-jet cutting. Non-limiting examples of shaped ceramic abrasive particles include shaped abrasive particles, such as triangular plates, tetrahedral abrasive particles, elongated ceramic rods/filaments, or other shaped abrasive particles. Shaped ceramic abrasive particles are generally homogenous or substantially uniform and maintain their sintered shape without the use of a binder such as an organic or inorganic binder that bonds smaller abrasive particles into an agglomerated structure and excludes abrasive particles obtained by a crushing or comminution process that produces abrasive particles of random size and shape. In many embodiments, the shaped ceramic abrasive particles comprise a homogeneous structure of sintered alpha alumina or consist essentially of sintered alpha alumina. Any of shaped abrasive particles can include any number of shape features. The shape features can help to improve the cutting performance of any of shaped abrasive particles. Examples of suitable shape features include an opening, a concave surface, a convex surface, a groove, a ridge, a fractured surface, a low roundness factor, or a perimeter comprising one or more corner points having a sharp tip. Individual shaped abrasive particles can include any one or more of these features.

The abrasive may include conventional (e.g., crushed) abrasive particles. Examples of useful abrasive particles include fused aluminum oxide-based materials such as aluminum oxide, ceramic aluminum oxide (which can include one or more metal oxide modifiers and/or seeding or nucleating agents), and heat-treated aluminum oxide, silicon carbide, co-fused alumina-zirconia, diamond, ceria, titanium diboride, cubic boron nitride, boron carbide, garnet, flint, emery, sol-gel derived abrasive particles, and mixtures thereof. The conventional abrasive particles can, for example, have an average diameter ranging from about 10 µm to about 2000 µm, about 20 µm to about 1300 µm, about 50 µm to about 1000 µm, less than, equal to, or greater than about 10 µm, 20, 30, 40, 50, 100, 150, 200, 250, 300, 350, 400, 450, 500, 550, 600, 650, 700, 750, 800, 850, 900, 950, 1000, 1050, 1100, 1150, 1200, 1250, 1300, 1350, 1400, 1450, 1500, 1550, 1650, 1700, 1750, 1800, 1850, 1900, 1950, or 2000 µm. For example, the conventional abrasive particles can have an abrasives industry-specified nominal grade. Such abrasives industry-accepted grading standards include those known as the American National Standards Institute, Inc. (ANSI) standards, Federation of European Producers of Abrasive Products (FEPA) standards, and Japanese Industrial Standard (HS) standards. Exemplary ANSI grade designations (e.g., specified nominal grades) include: ANSI 12 (1842 µm), ANSI 16 (1320 µm), ANSI 20 (905 µm), ANSI 24 (728 µm), ANSI 36 (530 µm), ANSI 40 (420 µm), ANSI 50 (351 µm), ANSI 60 (264 µm), ANSI 80 (195 µm), ANSI 100 (141 µm), ANSI 120 (116 µm), ANSI 150 (93 µm), ANSI 180 (78 µm), ANSI 220 (66 µm), ANSI 240 (53 µm), ANSI 280 (44 µm), ANSI 320 (46 µm), ANSI 360 (30 µm), ANSI 400 (24 µm), and ANSI 600 (16 µm). Exemplary FEPA grade designations include P12 (1746 µm), P16 (1320 µm), P20 (984 µm), P24 (728 µm), P30 (630 µm), P36 (530 µm), P40 (420 µm), P50 (326 µm), P60 (264 µm), P80 (195 µm), P100 (156 µm), P120 (127 µm), P120 (127 µm), P150 (97 µm), P180 (78 µm), P220 (66 µm), P240 (60 µm), P280 (53 µm), P320 (46 µm), P360 (41 µm), P400 (36 µm), P500 (30 µm), P600 (26 µm), and P800 (22 µm). An approximate average particles size of reach grade is listed in parenthesis following each grade designation.

Shaped abrasive particles or crushed abrasive particles can include any suitable material or mixture of materials. For example, shaped abrasive particles can include a material chosen from an alpha-alumina, a fused aluminum oxide, a heat-treated aluminum oxide, a ceramic aluminum oxide, a sintered aluminum oxide, a silicon carbide, a titanium diboride, a boron carbide, a tungsten carbide, a titanium carbide, a diamond, a cubic boron nitride, a garnet, a fused alumina-zirconia, a sol-gel derived abrasive particle, a cerium oxide, a zirconium oxide, a titanium oxide, and combinations thereof. In some embodiments, shaped abrasive particles and crushed abrasive particles can include the same materials. In further embodiments, shaped abrasive particles and crushed abrasive particles can include different materials.

Filler particles can also be included in abrasive. Examples of useful fillers include metal carbonates (such as calcium carbonate, calcium magnesium carbonate, sodium carbonate, magnesium carbonate), silica (such as quartz, glass beads, glass bubbles and glass fibers), silicates (such as talc, clays, montmorillonite, feldspar, mica, calcium silicate, calcium metasilicate, sodium aluminosilicate, sodium silicate), metal sulfates (such as calcium sulfate, barium sulfate, sodium sulfate, aluminum sodium sulfate, aluminum sulfate), gypsum, vermiculite, sugar, wood flour, a hydrated aluminum compound, carbon black, metal oxides (such as calcium oxide, aluminum oxide, tin oxide, titanium dioxide), metal sulfites (such as calcium sulfite), thermoplastic particles (such as polycarbonate, polyetherimide, polyester, polyethylene, poly(vinylchloride), polysulfone, polystyrene, acrylonitrile-butadiene-styrene block copolymer, polypropylene, acetal polymers, polyurethanes, nylon particles), thermosetting particles (such as phenolic bubbles, phenolic beads, polyurethane foam particles and the like) and natural gum (such as Arabic gum, Acacia gum, etc.). The filler may also be a salt such as a halide salt. Examples of halide salts include sodium chloride, potassium cryolite, sodium cryolite, ammonium cryolite, potassium tetrafluoroborate, sodium tetrafluoroborate, silicon fluorides, potassium chloride, magnesium chloride. Examples of metal fillers include, tin, lead, bismuth, cobalt, antimony, cadmium, iron and titanium. Other miscellaneous fillers include sulfur, organic sulfur compounds, graphite, lithium stearate and metallic sulfides. In some embodiments, individual shaped abrasive particles or individual crushed abrasive particles can be at least partially coated with an amorphous, ceramic, or organic coating. Examples of suitable components of the coatings include, a silane, glass, iron oxide, aluminum oxide, or combinations thereof. Coatings such as these can aid in processability and bonding of the particles to a resin of a binder.

### Magnetic Abrasive Orientation

At least one magnetic material may be included within or coated to abrasive particles. Examples of magnetic materials include iron; cobalt; nickel; various alloys of nickel and iron marketed as Permalloy in various grades; various alloys of iron, nickel and cobalt marketed as Fernico, Kovar, FerNiCo I, or FerNiCo II; various alloys of iron, aluminum, nickel, cobalt, and sometimes also copper and/or titanium marketed as Alnico in various grades; alloys of iron, silicon, and aluminum (about 85:9:6 by weight) marketed as Sendust alloy; Heusler alloys (e.g., Cu₂MnSn); manganese bismuthide (also known as Bismanol); rare earth magnetizable materials such as gadolinium, dysprosium, holmium, europium oxide, alloys of neodymium, iron and boron (e.g., Nd₂Fe₁₄B), and alloys of samarium and cobalt (e.g., SmCo₅); MnSb; MnOFe₂O₃; Y₃Fe₅O₁₂; CrO₂; MnAs; ferrites such as ferrite, magnetite; zinc ferrite; nickel ferrite; cobalt ferrite, magnesium ferrite, barium ferrite, and strontium ferrite; yttrium iron garnet; and combinations of the foregoing. In some embodiments, the magnetizable material is an alloy containing 8 to 12 weight percent aluminum, 15 to 26 wt% nickel, 5 to 24 wt% cobalt, up to 6 wt% copper, up to 1 % titanium, wherein the balance of material to add up to 100 wt% is iron. In some other embodiments, a magnetizable coating can be deposited on an abrasive particle 100 using a vapor deposition technique such as, for example, physical vapor deposition (PVD) including magnetron sputtering. Including these magnetizable materials can allow shaped abrasive particles to be responsive a magnetic field. Any of shaped abrasive particles can include the same material or include different materials.

Applied magnetic fields used in practice of the present disclosure have a field strength in the region of the magnetizable particles being affected (e.g., attracted and/or oriented) of at least about 10 gauss (1 mT), at least about 100 gauss (10 mT), or at least about 1000 gauss (0.1 T), although this is not a requirement. The applied magnetic field can be provided by one or more permanent magnets and/or electromagnet(s), or a combination of magnets and ferromagnetic members, for example. Suitable permanent magnets include rare-earth magnets comprising magnetizable materials are described hereinabove. The applied magnetic field can be static or variable (e.g., oscillating). Upper or lower magnetic members may be used, each having north (N) and south (S) poles, where each magnetic member be monolithic or may be composed of multiple component magnets and/or magnetizable bodies, for example. If comprised of multiple magnets, the multiple magnets in a given magnetic member can be contiguous and/or co-aligned (e.g., at least substantially parallel) with respect to their magnetic field lines where the components magnets closest approach each other. Stainless steel retainers may be used to retain the magnets in position. While stainless steel or an equivalent is suitable due to its nonmagnetic character, magnetizable materials may also be used. Mild steel mounts may be used to support stainless steel retainers.

Once the magnetizable abrasive particles are dispensed onto the curable binder precursor, the binder may be cured at least partially at a first curing station (not shown), so as to firmly retain the magnetizable particles in position. In some embodiments, additional magnetizable and/or non-magnetizable particles (e.g., filler abrasive particle and/or grinding aid particles) can be applied to the make layer precursor prior to curing. In the case of a coated abrasive article, the curable binder precursor comprises a make layer precursor, and the magnetizable particles comprise magnetizable abrasive particles. A size layer precursor may be applied over the at least partially cured make layer precursor and the magnetizable abrasive particles, although this is not a requirement. If present, the size layer precursor is then at least partially cured at a second curing station, optionally with further curing of the at least partially cured make layer precursor. In some embodiments, a supersize layer is disposed on the at least partially cured size layer precursor.

### Abrasive Placement

The shaped abrasive particles described herein may have a specified z-direction rotational orientation about a z-axis passing through shaped abrasive particles, where the z-axis of the abrasive may be substantially perpendicular to the wheel substrate. Shaped abrasive particles are orientated with a surface feature, such as a substantially planar surface particle, rotated into a specified angular position about the z-axis. The specified z-direction rotational orientation abrasive wheel occurs more frequently than would occur by a random z-directional rotational orientation of the surface feature due to electrostatic coating or drop coating of the shaped abrasive particles when forming the abrasive wheel. As such, by controlling the z-direction rotational orientation of a significantly large number of shaped abrasive particles, the cut rate, finish, or both of coated abrasive wheel can be varied from those manufactured using an electrostatic coating method. In various embodiments, at least 50, 51, 55, 60, 65, 70, 75, 80, 85, 90, 95, or 99 percent of shaped abrasive particles can have a specified z-direction rotational orientation which does not occur randomly and which can be substantially the same for all of the aligned particles. In other embodiments, about 50 percent of shaped abrasive particles can be aligned in a first direction and about 50 percent of shaped abrasive particles can be aligned in a second direction. In one embodiment, the first direction is substantially orthogonal to the second direction.

The specific z-direction rotational orientation of formed abrasive particles can be achieved through use of a precision apertured screen that positions shaped abrasive particles into a specific z-direction rotational orientation such that shaped abrasive particles can only fit into the precision apertured screen in a few specific orientations such as less than or equal to 4, 3, 2, or 1 orientations. For example, a rectangular opening just slightly bigger than the cross section of shaped abrasive particles comprising a rectangular plate will orient shaped abrasive particles in one of two possible 180 degree opposed z-direction rotational orientations. The precision apertured screen can be designed such that shaped abrasive particles, while positioned in the screen's apertures, can rotate about their z-axis (normal to the screen's surface when the formed abrasive particles are positioned in the aperture) less than or equal to about 30, 20, 10, 5, 2, or 1 angular degrees.

The precision apertured screen, having a plurality of apertures selected to z-directionally orient shaped abrasive particles into a pattern, may include an abrasive retainer. The abrasive retainer may include an adhesive tape on a second precision apertured screen with a matching aperture pattern, an electrostatic field used to hold the particles in the first precision screen, a mechanical lock such as two precision apertured screens with matching aperture patterns twisted in opposite directions to pinch particles within the apertures, or other retentive mechanism. The first precision aperture screen may be filled with shaped abrasive particles, and the retaining member is used to hold shaped abrasive particles in place in the apertures. In one embodiment, adhesive tape on the surface of a second precision aperture screen aligned in a stack with the first precision aperture screen causes shaped abrasive particles to be retained in the apertures of the first precision screen stuck to the surface of the tape exposed in the second precision aperture screen's apertures.

Following positioning in apertures, a coated backing having make layer may be positioned parallel to the first precision aperture screen surface containing the shaped abrasive particles with make layer facing shaped abrasive particles in the apertures. Thereafter, coated backing and the first precision aperture screen are brought into contact to adhere shaped abrasive particles to the make layer. The retaining member is released such as removing the second precision aperture screen with taped surface, untwisting the two precision aperture screens, or eliminating the electrostatic field. Then the first precision aperture screen is then removed leaving the shaped abrasive particles having a specified z-directional rotational orientation on the coated abrasive article for further conventional processing such as applying a size coat and curing the make and size coats.

Additive manufacturing processes such as those described with respect to FIGs. 1-5 allow creation parts which are not possible to produce using conventional methods. However, creating the part layer per layer presents a challenge because of the time needed to build each layer, reducing the range of potential products because the process cost.

One way to address that time constrain is to use a continuous process, where some or all of the 3D printing steps are done together at the same time. This can reduce the layer building time by more than half and increase the throughput of the printer.

The time needed for each different step is highly dependent of the powder or the mixture which is printed. A highly flowable powder can be spread and levelled much faster than a mixture having a poor flowability behavior. A highly conductive powder can be heated and dried faster than a refractory or ceramic material. Printing time is driven by the powder used but also by the precision needed on the final piece (driving the thickness layer) and by the needed strength to handle the printed part before the final consolidation step.

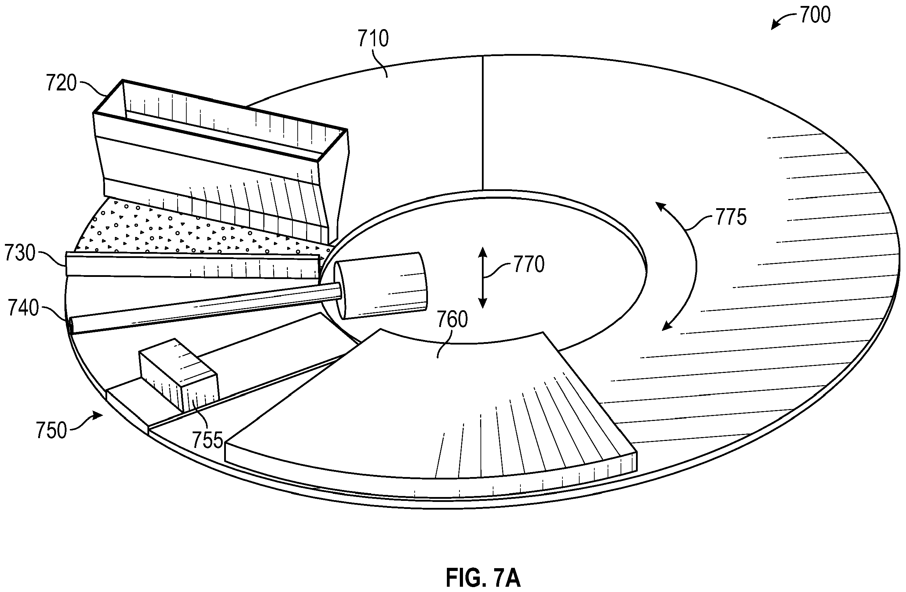

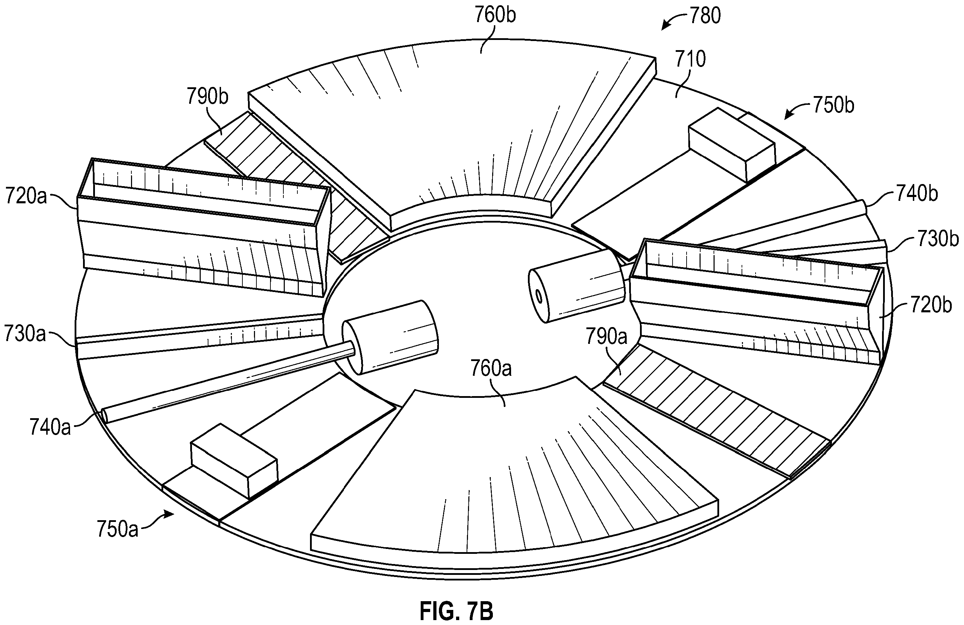

In the embodiments discussed above, no digitalization is included in any of the area and therefore no specific shape or feature can be introduced into the grinding wheel. In the embodiment of FIGS. 7A and 7B, one or more binder jeet printheads are added, which allow for the printing of different shapes and wheels at the same time. It can also allow for printing different features on each printed grinding wheel. Such an embodiment combines the advantages of the digitalization of the traditional binder jet printer with the spiral continuous building process.

Designing a continuous process in which each operation can be done together during the same time, the process time can be divided at minimum by two. In the systems described below with respect to FIGS. 7-10, the basic principle of a spiral layer is kept but a binder jet printhead is added to allow for printing a lot of different abrasive articles in the same time or print different features on each printed grinding wheel.

FIGS. 7-10 describe a continuous printing system that prints abrasive article precursors. It is expressly understood that the term "abrasive article" as used with respect to a product generated by a continuous printer can refer to both an abrasive article precursor that may require additional firing, such as vitreous or metal bonded abrasive particles, as well as abrasive articles that are substantially finished products without additional firing requirements, such as resin bonded abrasive articles.

FIGS. 7A and 7B illustrate a platform for continuous additive manufacturing of an abrasive product. Platform 700 allows for faster continuous manufacture of abrasive products by allowing several steps in the process to be completed simultaneously. The basic steps for additive manufacturing of an abrasive product using a binder jet system include spreading the abrasive mixture, leveling the layer, printing binder, and setting the layer.

In one embodiment, platform 700 has a disc-shape 710. The shape of disc 710 is sized to being able to print multiples abrasive articles in a specific size range. For example, the individual abrasive articles may have sizes ranging from about 2 mm diameter up to about 170 mm diameter after sintering are selected.

In one example, disk 710 has about a 600 mm outer diameter, about a 236 mm inner diameter, about a medium length of 1142 mm, with approximately 2389 cm² platform surface. This represents a significant increase in available surface area compared to prior art additive manufacturing processes.

Disc 710 can move in space as indicated by arrows 710 and 775. In one embodiment, a motor allows for disc 710 to move up and down as indicated by arrow 770. Another motor, in one embodiment, allows for disc 710 to move rotationally as indicated by arrow 775. Motors allowing for movement in directions 770 and 775 may be step motors or any other suitable movement mechanism.

In one embodiment (not show in FIGS. 7A and 7B), platform 700 is surrounded by a cylinder that keeps abrasive mixture from spilling outside of the platform area. Use of a cylinder may allow for recapture of abrasive mixture that is not incorporated into an abrasive product. For example, using a temporary binder, it is possible to print an abrasive article with complex internal structure, such as the shapes and structures discussed in co-owned provisional patent application Serial No. 62/877,443, filed on July 23, 2019, and U.S. Patent Application Publication 2018/0104793, filed on June 23, 2016. For example, a bonded abrasive article can be constructed using binder jet methods described herein, to have arcuate, tortuous, or straight channels extending partway or completely throughout. Bonded abrasive articles can also be constructed with structures extending only partway through, and can include impeller structures that direct cooling fluids to the grinding area. Additionally, channels may extend from an interior to an exterior surface of the bonded abrasive article.

A hopper 720 is present on disc. Hopper 720 contains the abrasive mixture to be printed. In an embodiment where the abrasive article is a vitreous bonded abrasive article, the abrasive mixture to be printed includes abrasive particles as well as binder precursor particles. The abrasive mixture may be premixed, in one embodiment. In another embodiment, hopper may include a mixing component. For a vitreous bonded abrasive article, the binder precursor could include vitreous frit, glass, or other suitable materials. In an embodiment where the abrasive article is a metal bonded or polymer bonded article, the binder precursor could include metal powder or polymer powder, respectfully. The abrasive mixture may also include, in other embodiments, other material such as filler, secondary abrasives, grinding aids or other suitable additives. Methods and systems described herein may also be suitable for resin based abrasive articles. In such embodiments, the resin binder could be dispensed as part of the abrasive mixture. A temporary binder may still be used to encourage aqueous, phenolic based or other solvent-based bonding. A temporary binder may also be dispensed as part of the abrasive material, which may react with a compound dispensed by a dispenser, such as dispenser 750.

Hopper 720 is illustrated as an open component that can, in some embodiments, be filled from an external source (not shown). Filling periodically, or continuously, from an external source may allow for a smaller hopper 720, relative to platform 700, allowing more space on disc 710 for additional components. A smaller hopper 720 also reduces the total vertical footprint of platform 700.

Hopper 720 also facilitates dispensing of the abrasive mixture onto a platform. Hopper may dispense the abrasive mixture or provide it to a dispenser for placement. Dispensing of the abrasive mixture can occur in any suitable matter, such as vibrating hopper 720, vibrating sieve, opening a dispensing panel, using an electromagnetic feeder or through any other suitable mechanism. In one embodiment, a sieve is placed below hopper 720 to facilitate even distribution of the abrasive mixture.

A leveling tool 730 is present to distribute the dispensed abrasive mixture evenly along a width 712 of disc 710. In some embodiments leveling blade 730 has an angle with respect to disc 710 to facilitate movement of powder across width 712. In some embodiments, a second levelling tool (not shown) is placed near leveling tool 730. In one embodiment, the second leveling blade is closer to the platform than the first one and has a different angle.

In some embodiments, a rotating leveler 740 is also present behind leveling tool 730. Rotating leveler 740, in some embodiments, is closer to disc 710 than levelling tool 730. Rotating leveler 740 increases density of the deposited abrasive material. Density of the deposited abrasive material can directly affect the abrasive performance of a final abrasive article. Depending on the final product, different densities are desired. For example, a less dense, and more porous, bonded abrasive may be useful for abrading operations where large chips are created and need to be removed such as during creep feed grinding or where lubricant is used as the pores can help bring and maintain lubricant at an active grinding area, preventing burning of the workpiece being abraded. More dense bonded abrasive products may be useful when a higher lifetime is requested.

Densification, or compaction, of deposited abrasive material can be accomplished, as illustrated in FIG. 7A, by combining a leveling tool 730 and a leveler 740 at different distances from disc 710. The different distances of leveler 730 and 740 can be adjusted based on the abrasive grit size or precision requested for the final abrasive article. Densification can be further accomplished, for example, using vibration, local compaction or any other suitable method.

In some embodiments, the height of different components can be adjusted during the printing process to increase the printing speed when parts or section can accept a thicker layer. Adjusting the height of different components can increase building speed by keeping the fine details of each component where it is needed.

A binder jet printhead 750 is located behind leveler 740. Binder jet printhead 750 dispenses a binder material on the deposited abrasive mixture in a desired pattern. The binder jet printhead 750 may have several nozzles (not shown in FIG. 7A), each of which can dispense binder material.

In embodiments where the abrasive mixture includes a binder precursor that will be activated during a later process, binder jet printhead 750 dispenses a temporary binder. In the example of a metal bond or vitreous bond abrasive article, the temporary binder is selected such that it will be burnt out during a later sintering process. In the example of a resin bond abrasive article, for some embodiments, the temporary binder is removed before curing of a high temperature resin, or combined with the resin in the curing process.

Additionally, in some embodiments the temporary binder may remain present in the final abrasive article. The temporary binder may also be included, in some embodiments, in the abrasive mixture and may react with a dispensed liquid material to form a binder. This may reduce the amount of binder that is dispensed through the nozzles.

As illustrated in FIG. 7A, binder print jet 750, in one embodiment, is mobile, such that it can move along the axis indicated by arrow 755, such that an entire width 710 can receive binder material in a desired pattern. Movement of printhead 750 can be driven by a step motor having an encoder to know where the nozzles lines are positioned in front of the platform.

In some embodiments, the binder material is deposited by printhead 750 as a diluted aqueous mixture, solvent based mixture or phenolic based mixture. Binder material is often a naturally viscous material that is not easily dispensed through binder jet nozzle arrays. Dilution reduces a viscosity of the binder to a point where it can be dispensed easily through the nozzles.

The binder material is deposited by an array of nozzles present on printhead 750. In one embodiment, the array of nozzles is a square array of nozzles. The array may have at least about 250 nozzles, in one embodiment, or at least about 500 nozzles, or at least about 800 nozzles, or at least about 1000 nozzles. Dispensing of binder material by the nozzles on printhead 750 is controlled by a controller (not shown in FIG. 7A), which determines the number and rate of droplets released from each nozzle based on the intended abrasive articles being printed. For example, the rate of binder dispensation may depend at least in part on: pieces to print, mixture particles sizes, mixture particle material, green strength needed, number of nozzles per printhead 750, nozzle size, droplet frequency, droplet rate, printhead linear speed, layer thickness or other relevant parameters.

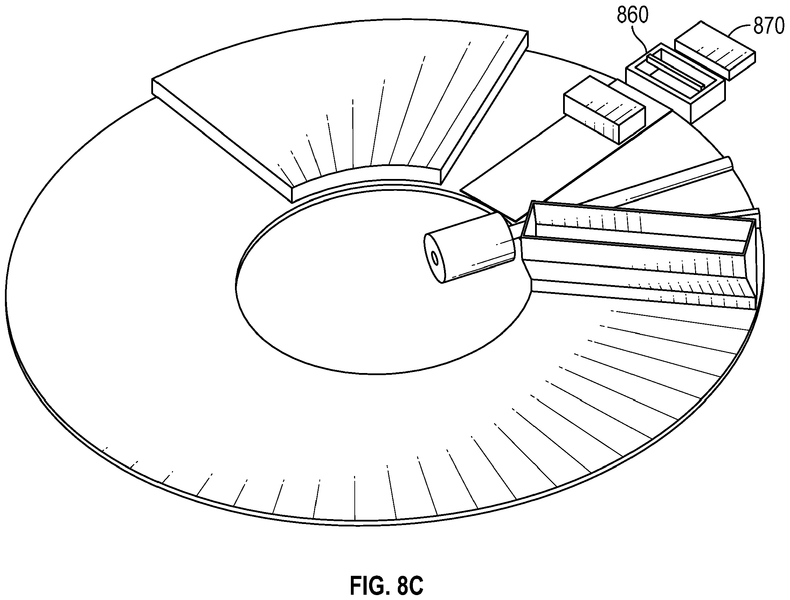

In some embodiments, printhead(s) 750 will be able to move regularly in front of a cleaning station and a parking station (neither shown in FIG. 7A). Parking and cleaning stations may be placed closer to the center of platform 700 or close to the external diameter of platform 700, as illustrated for example in FIG. 8C, discussed below.

Also present within platform 700 is a setting station 760 which facilitates setting of each layer of deposited abrasive material in between layers. The amount of setting needed for each layer of deposited powder is a function of the amount of abrasive material deposited, the heat produced by setting station 760, and the speed of rotation of disc 710. Setting may be accomplished by applying a vacuum to remove excess fluid, subjecting the layer to a blower, by thermally drying the layer, thermally curing the layer, UV-curing the layer, or otherwise treating the layer. Setting may also be dictated, at least in part, based on parameters needed for later processing. For example, vitreous abrasive articles made using additive manufacturing require a final sintering step at a high temperature. Additionally, at least some resin-bonded abrasive articles require a final sintering step.

While setting station 760 is illustrated, it is expressly contemplated that, for some abrasive articles, setting may not be needed for each layer. For example, some abrasive articles may only undergo a drying step after all layers, or a subset of layers, are printed. In some embodiments, such as where a reactive temporary binder is included in the abrasive mixture, intermittent drying of each layer is not needed for structural integrity.

A motor will move platform 700 down during the additive manufacturing process to progressively increase the total layers in the spiral. The speed of the motor can be adjusted based on the define thickness layer and the rotation speed. The motor may operate continuously or discretely.

The finished abrasive article can be removed when the additive manufacturing process is completed, for example by adjusting disc 710 along axis 770.

Rotational movement of platform 700 can also be controlled by a step motor. Speed of rotation is driven by a number of factors including flowability of the abrasive mixture, binder dispensation and saturation rate, setting time available, and leveling of each layer. The flowability of the abrasive mixture influences the spreading of the powder and, thus, the levelling of each layer without disturbing the previous layer.

Not shown in FIG. 7 is a controller that will drive the operation of different components, positioning of disc 710 and the relative position of each of components 720, 730, 740, 750 and 760 with respect to disc 710. Movement and dispensation rate of printhead 750 will also be dictated by instructions sent from the controller. Movement of step motors and encoders will also be dictated by instructions sent from the controller. Additionally, the controller will also facilitate safety functions to protect both an operator and a machine, including guards, maximum and minimum movement speeds and end switches.

The controller may also, in one embodiment, retrieve and interpret 3D files for the abrasive articles to be printed, such as CAD or STL files. The controller may also interpret the 3D files to determine placement of abrasive articles to be printed on platform 700.

Rotational movement of disc 710 is at a continuous rate in direction 755, in one embodiment. In another embodiment, rotational movement is discrete, such that disc 710 walks through several discrete positions, during which different operations are performed. The printed abrasive articles are formed in a spiral on disc 710, which is continuously moved downward to allow for increasing height of the abrasive articles being formed. In one embodiment, printhead 750 is continuously jetting droplets on the powder bed to generate abrasive articles.

While single hopper 720 is illustrated as containing a single homogenous mixture, it is expressly contemplated that, in some embodiments, hopper 720 includes several compartments. Each compartment may contain different abrasive mixtures. For example, the portion of an abrasive article near the core may not need to contain high grade abrasive mineral, which is expensive. Instead, one or more interior compartments close to a core may contain an abrasive mixture with lower cost materials.

Use of systems described herein in FIGS. 7-11, therefore, allow for bonded abrasive articles with abrasive mixtures that can vary from layer to layer, or even between a first and second area in a layer.

FIG. 7B illustrates another embodiment in which multiple components are mirrored in the free space of disc 710. This may allow for two layers of abrasive material to be deposited for each rotation of disc 710, increasing therefore the object building speed. Similar components are numbered similarly with respect to 7A. For example, hopper 720a dispenses a first layer of abrasive mixture, which is then leveled by leveling tool 730a, and compacted by leveler 740a, receives binder from binder jet printhead 750a and is then dried by setting station 760a. After the first layer is dried by setting station 760a, the process repeats with the 'b' components. This allows a single working area 790a to receive two layers of abrasive material and binder each time disc 710 completes a rotation.

Use of two different sets of components allows for different layer structures to be formed - for example a first layer with a first abrasive mixture, dispensed from hopper 720a followed by a second layer with a second abrasive mixture, dispensed from hopper 720b. This may allow for unique structures with different properties in different layers. For example, a first layer may have a different porosity, hardness, density, abrasive particle composition, abrasive particle size, or abrasive particle orientation than a second layer.

The presence of additional sets of components, e.g. set 'a' and set 'b' depends in the amount of available space left on disc 710 after sufficient setting occurs. For abrasive articles where minimal setting is needed, or where a setting component is at a sufficient temperature, more than two sets of components may be present, such that three or even four layers can be deposited per rotation.

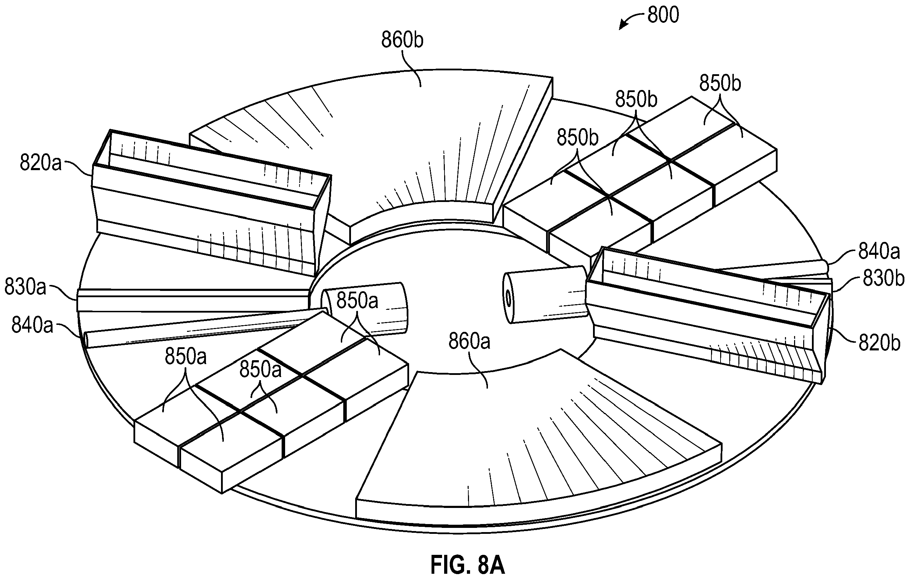

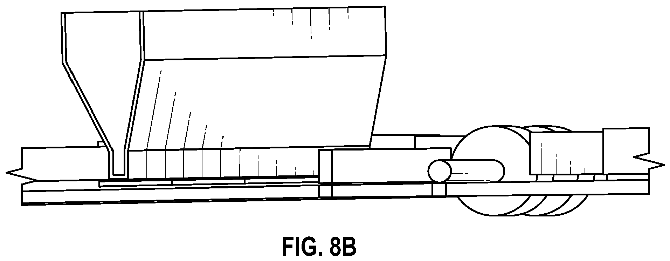

FIGS. 8A-8C illustrate a platform for continuous additive manufacturing of an abrasive product. FIG. 8A illustrates a top view of a similar set of components as those described with respect to FIG. 7B, and similar components are labeled similarly. FIG. 8B illustrates a side view of the continuous additive manufacturing system 800. However, instead of a moving printhead, as described with respect to printheads 750a and 750b, FIG. 8A illustrates an embodiment with stationary arrays of printheads 850a, 850b. Keeping printhead arrays 850a and 850b stationary reduces the complexity required to program dispensing of the binder material as a controller (not shown in FIG. 8A) is not required to program movement of printhead arrays 850a and 850b as well as dispensation of binder therefrom. In the embodiment illustrated in FIG. 8A, each printhead array 850a, 850b includes six printheads. In one embodiment, each printhead includes at least about 1000 nozzles, each allowing for jetting up to 30, 80 or even 160pl of binder fluid at 6kHz. Additionally, while only six printheads are shown there could be more than six, such as eight, nine, ten, twelve or more, in an array, or fewer than six, such as two, three, four or five. The number may be selected balancing the precision needed and increasing the assembly speed.

FIG. 8B illustrates a side view of a platform for continuous additive manufacturing, illustrating the variable distance between the components and the platform.

FIG. 8C illustrates an example platform with a cleaning station 860 and a parking station 870.

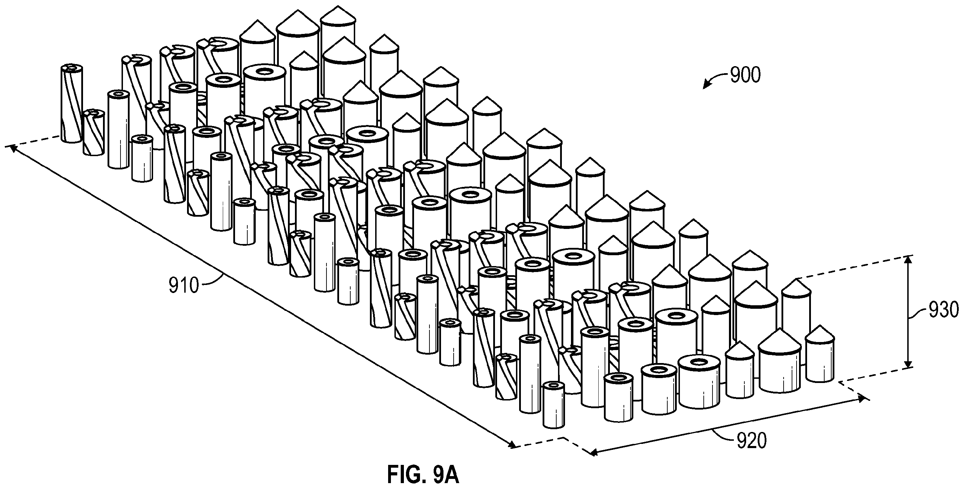

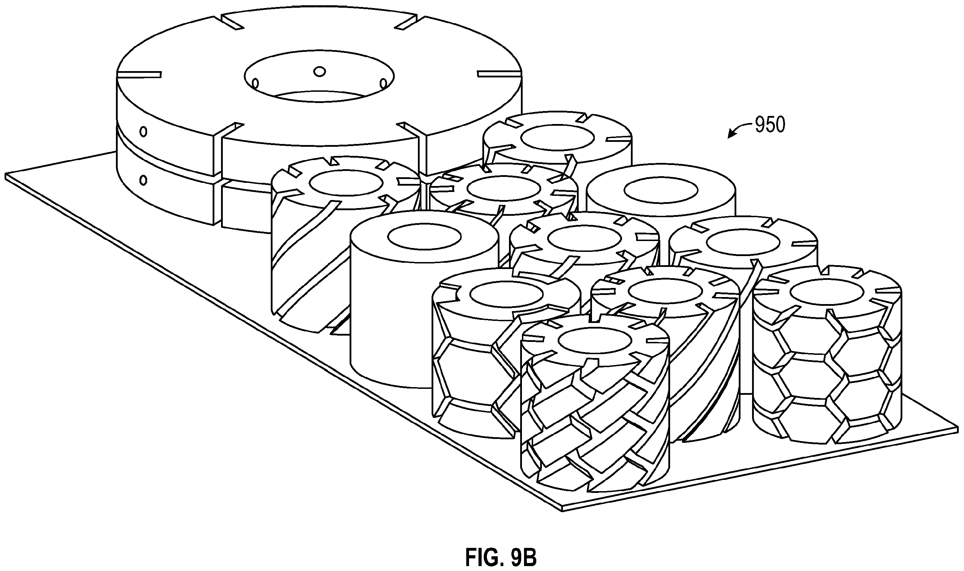

FIGS. 9A and 9B illustrate example arrangements of printed abrasive articles. Preferably, a combination of abrasive articles are manufactured within a workspace on a platform, such as platform 700, 780 or 800. As illustrated in FIGS. 9A and 9B, different arrangements of different abrasive articles can be assembled on a given workspace 900, 950 during a single additive manufacturing operation. Different shapes and sizes of abrasive articles can be manufactured on a different workspace, so long as all are formed from the same abrasive mixture.

The workspace available for additive manufacturing corresponds to a width of the rotating platform, width 712 for example. Length 910 of workspace 900 corresponds to width 712, for example. A width 920 of workspace 900 can vary depending on the embodiment. In some embodiments, different workspaces 900 can be arranged to cover substantially all of the available area on a platform.

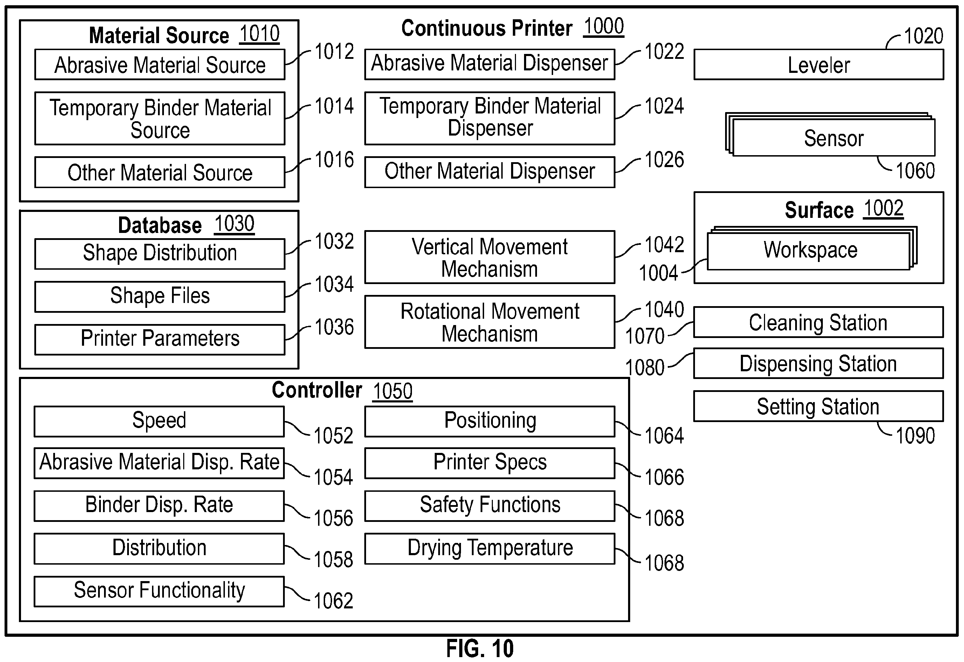

FIG. 10 illustrates a block diagram of a continuous printer. Continuous printer 1000 includes a surface 1002 with one or more workspaces 1004. Each workspace is designed to serve as a base on which abrasive articles can be additively manufactured.

Surface 1002 is configured to be rotated, while other components are intended to function in a substantially fixed arrangement. During one rotation of surface 1002, each workspace 1004 receives at least one layer of abrasive material and binder. However, in some embodiments, during one rotation of surface 1002, each workspace 1004 receives at least two layers of abrasive material and binder, or at least three layers, or at least four.

Continuous printer includes a materials source 1010. A given printing operation may require more material than on-board dispensers of printer 1000 can store. Additional abrasive material can be provided from abrasive material source 1012. Temporary binder material can be provided by a temporary binder material source 1014. Other material, such as filler, can be provided from an other material source 1016.

Abrasive material, provided by abrasive material source 1012, includes abrasive particles, which may be shaped, crushed or platey-type abrasive particles. In the embodiment where vitreous abrasive articles are being manufactured, abrasive material source also comprises vitreous bond precursor particles, such as glass frit. In the embodiment where metal bond abrasive articles are being manufactured, abrasive material source also comprises metal bond precursor particles, such as metal powder.

In the embodiments where further processes are required to activate bond precursor materials, a temporary binder material is dispensed in order to hold the abrasive article precursor together during the additive manufacturing process. The temporary binder material is selected such that it will burn out during later processing and not be present in the final article.

Functionality of continuous printer 1000 is controlled by a controller 1050, which may be a processor or microprocessor. Controller 1050, for example, sets and controls a speed 1052 of rotation of surface 1002. The rate may be set based on flowability of abrasive material, necessary setting time, binder dispensation rates, or any other suitable parameter.

Controller 1050 controls dispensing of materials onto each of workspaces 1004. Abrasive material is dispensed by an abrasive material dispenser 1022 at an abrasive material dispensing rate 1054. Abrasive material dispenser may be a hopper, and dispensing may include vibrating the hopper or otherwise causing abrasive material to fall from the hopper onto a workspace 1004.

After a layer of abrasive material is dispensed from abrasive material dispenser 1022, the abrasive material is leveled across workspace 1004 by a leveler 1020. Leveler 1020, in one embodiment, evens out the abrasive material to a substantially even height across workspace 1004. In another embodiment, a leveling mechanism 1020 also provides a compacting operation, causing densification of the abrasive material mixture. The leveler 1020, or levelers 1022, are at a variable height above workspace 1004. In the embodiment where two or more levelers 1022 are present, the levelers 1022 may be at different heights with respect to each other. Positioning 1064 of the levelers with respect to a workspace is controlled by controller.

The abrasive material mixture is held in place during manufacturing by temporary binder material which is provided by temporary binder material dispenser 1024, which is located in a dispensing station 1080 of printer 1000. Controller 1050 controls the binder dispensing rate 1056, and distribution 1058 of binder along the surface of the dispensed abrasive mixture. Temporary binder material dispenser, in one embodiment, is a jet printhead including an array of nozzles, each nozzle configured to output droplets of binder material onto a given area of workspace 1004. Controller 1050 controls which nozzles output binder material, and at what rate 1056, in order to temporarily bind abrasive material mixture into a desired shape for each layer of an abrasive article being manufactured.

Controller 1050 also controls settings for setting station 1090, including setting parameters 1068. Setting station 1090 is designed such that the binder material dispensed in a current layer on workspace 1004 is sufficiently dried after exposure to setting station 1090 such that another layer of abrasive material mixture can be dispensed by abrasive material dispenser 1022 without causing structural integrity problems.

Controller 1050 also controls other specifications 1066 of printer 1000, and triggers safety function 1068 as needed in order to protect an operator or printer 1000.

Controller 1050 may also cause temporary binder material dispenser 1024 to interact with a cleaning station 1070 either periodically, or in response to an alert from a sensor 1060. It is possible that abrasive material will become attached to a nozzle or other dispensing mechanism of temporary binder material dispenser. This can result in a clog, which reduces the precision of binder material dispensing in each layer. Periodically, or in response to a notice of a detected clog from a sensor 1060, controller 1050 may direct temporary binder material dispenser 1024, or an affected portion thereof, to interact with a cleaning station. Cleaning station 1070 may include a brush, a vibrating mechanism, or another device suitable for cleaning off a clogged dispenser.

Controller 1050 directs operation of the components of continuous printer 1000 based on the shapes of abrasive articles being manufactured. Shape information is retrieved from database 1030, which may store shape files 1034, such as CAD or STL files. A distribution of shapes 1032 for a workspace may also be stored in database 1030. Alternatively, controller 1050 may determine a distribution of shapes 1032 based on retrieved shape files 1034 for a given operation. Controller also retrieves printer parameters 1036, such as setting parameters, movement rates, dispensing rates of different material dispensers, and other relevant parameters.

Controller 1050 also controls movement mechanisms 1040 and 1042. Movement mechanisms may be any suitable motor, such as a step motor, operating discretely or continuously. Rotation mechanism 1040 causes rotational movement of surface 1002, such that each workspace 1004 interacts with each of dispensers 1022, 1024, leveler 1020, and setting station 1090 at least once during a rotation. However, while only one of each component is described with respect to FIG. 10 for simplicity, it is expressly contemplated that, for example, a workspace 1002 may receive two or more layers of abrasive material and temporary binder during a rotation.

Controller 1050 also controls a variety of sensors 1060 that may be present within continuous printer 1000. Sensors 1060 may be optical, cameras, or thermometers, for example. Sensors can be used to measure quality control of abrasive articles during assembly, including monitoring curing of temporary binder, measuring hardness, porosity and / or density of abrasive article as well as other mechanical properties. Sensors 1060 are envisioned as including any in-line measurement that can help with quality control. Sensors 1060 may also monitor fill levels for abrasive material dispenser 1022, temporary binder material dispenser 1024, and other material dispenser 1026, such that additional material can be provided by a material source 1010 as needed.

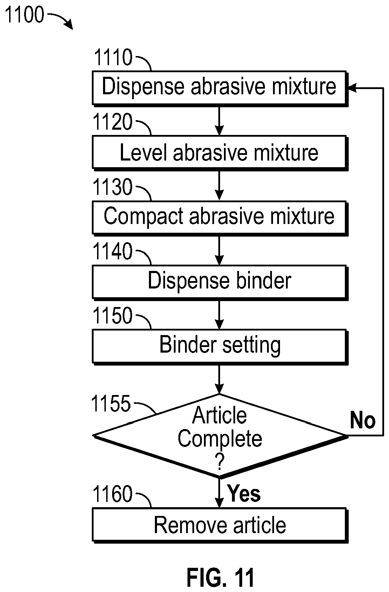

FIG. 11 illustrates a method of manufacturing an abrasive article using a continuous printer. Method 1100 may be suitable with any of the continuous printers of FIGS. 7-10, or another suitable continuous printer.

In block 1110, an abrasive mixture is dispensed on a workspace. The workspace, in one embodiment, is a moving workspace. The abrasive mixture may be dispensed on a continuously moving workspace, in one embodiment. In another embodiment the workspace moves discretely between positions, one of which is to receive the abrasive mixture.

The abrasive mixture, in one embodiment, includes abrasive particles, such as shaped, crushed or platey abrasive particles. The abrasive mixture may also include binder precursor particles, in embodiments where a final abrasive article is a vitreous, polymeric, resin or metal-based bond. The abrasive mixture may also include filler material or material that delivers a desired mechanical property to the final abrasive article including porosity, density, or hardness.

In block 1120, the abrasive mixture is leveled. Leveling includes spreading out the abrasive mixture to a substantially consistent height across a workspace.

In block 1130, the abrasive mixture is compacted. Compacting can be an important step to increase the density of the final abrasive article. In some embodiments, leveling also includes compacting the abrasive mixture, such that steps 1120 and 1130 are performed by similar tools, or even performed simultaneously. For example, increasing the bulk green density by 10% on a vitreous bonded abrasive mixture can save 5% porosity after sintering and increase hardness by several degrees. Pre-compacting causes less density decrease than when un-compacted. For example, for completely pressed wheels there may be negligible decrease in density. For additively manufactured abrasive wheels, the decrease may be higher, and compaction may move the density change in between additively manufactured wheels without compaction and closer to pressed wheels.

In block 1140, binder material is dispensed. The binder material is dispensed as a liquid from one or more liquid dispensing sources. For example, the binder material may be dispensed by a moving printhead of a binder jet printer, where the binder jet printhead moves across the workspace depositing binder material to create a desired design for the layer of the abrasive article that includes the dispensed abrasive mixture. In another embodiment, the binder material is dispensed by a static dispensing source, such as an array of binder jet printheads, or an array of nozzles. In some embodiments, the binder material is a temporary binder material configured to be removed, or often burnt out, during later setting and firing processes. The binder material may be a dilute binder material, for example in an aqueous, solvent based, phenolic based or other suitable solution.

In block 1150, the dispensed binder material undergoes a setting step. The setting step may include heating a workspace, and the layered material on the workspace, to a temperature that allows for curing or setting of the dispensed temporary binder material. Setting may also include thermally drying the dispensed abrasive material and binder on the workspace. Setting may also include UV-curing or other suitable curing mechanism. Setting is an important step to ensure structural integrity of the abrasive article being assembled during deposition of future layers. The method of setting may be selected based on the treatment needed to fix the temporary binder or the amount of binder applied. In the event a dilute binder is used, the water or other solvent may need to be removed, which may also be part of the setting process.

At decision point 1155, the abrasive article is either complete, in which case method 1100 proceeds to block 1160. If the abrasive article is not yet complete, method 1100 returns to block 1110, where another layer of abrasive mixture is deposited. In some embodiments, such as those illustrated in FIGS. 7-8, method 1100 creates a spiral of abrasive material layers as the abrasive article is built.

In block 1160, a finished abrasive article is removed from the continuous printer. Removal may include moving the abrasive article off of a workspace and subjecting it to further processing. For example, a vitreous or metal-bonded abrasive article usually undergoes an additional firing process to facilitate melting or sintering of the bond precursor particles and burnout of the temporary binder. Polymer-bonded abrasive articles may also undergo another processing step to facilitate polymerization. Depending on the final product required by the customer, the abrasive product can be glued on a shaft or on a support, can be machined to specific required size, balance, and being marked.

### Examples and Exemplary Embodiments

Various embodiments of the present disclosure can be better understood by reference to the following Examples which are offered by way of illustration. The present invention is defined by the claims and is not limited to the Examples given herein.

### Example 1

In the configuration illustrated in FIG. 8, the platform surface has 2389 cm². Using material from 3M Precision Grinding GmbH, St. Magdalener Straße 85, 9500 Villach - Austria, specifically 8A120J6V601 or 95DA120/220H7V301, as examples, with an intended layer thickness of 300 µm, a saturation of 30%, a PR of 55%. The nozzle covering surface is 0.00381 mm² with a droplet volume of 160pL, assuming 80% of nozzles are efficient, which is an estimate considering defects after long usage. The printing speed was simulated as 15 mm/s at the average diameter, which was limited by the levelling roller station as the printhead speed could reach several meters per minute otherwise. Calculation shows that 4 rows of nozzles are needed to drop the required amount of binder. If a thicker layer is needed with the same saturation, an additional pair of rows must be added. The time needed to print a 300µm layer was simulated at 44s for the mirrored design which means 1.63 cm³/s.

This can be compared to 110s achieved by M-Flex^{®} printer (available from ExOne with corporate headquarters in North Huntingdon, PA) with similar material and similar parameters, which equates to 0.27 cm³/s. This simulation shows that embodiments of the present invention can achieve throughput of up to 4-5 times higher for the mirrored design of FIGS. 7B and 8, and 2-2.5 times the throughput for the design of FIG. 7A. This value includes the pause printing time needed to clean printhead at the cleaning station.

### Example 2

Increasing the layer thickness will not change the linear speed and therefore will again increase the efficiency of the printer. The limit of the layer thickness will be driven by the precision of the final shape required on the printed part and the possibility of the droplet to diffuse into the powder layer.

## Claims

1. An abrasive wheel maker apparatus (700) for forming a continuous single layer bonded abrasive wheel, comprising:
a wheel substrate (710) having a dispensing surface;
an abrasive material dispenser (720) configured to dispose a binder precursor onto a circular section of the dispensing surface and to dispose a plurality of abrasive particles at least partially within the binder precursor; and
a rotation device configured to rotate the dispensing surface relative to the abrasive material dispenser;
the apparatus being **characterized in that** if further comprises: a leveler (730) configured to level the layer of the abrasive mixture at a leveling location, such that the layer has a substantially smooth surface;
a compacting tool (740) configured to compact the layer of the abrasive mixture at a compacting location, such that a density of the layer of abrasive mixture increases;
a liquid dispenser (750) configured to apply a liquid material from a liquid dispenser at a liquid dispensing station, to the compacted layer of abrasive mixture;
a setting station (760) configured to allow the layer of abrasive mixture and dispensed liquid to set.

2. The apparatus (700) of claim 1, wherein the rotation device is configured to rotate the dispensing surface relative to the abrasive material dispenser while the abrasive material dispenser (720) disposes the binder precursor and the plurality of abrasive particles to form the continuous single layer bonded abrasive wheel.

3. The apparatus (700) of claim 1, wherein the abrasive material dispenser (720) is configured to dispose a formed abrasive substrate, the plurality of abrasive particles affixed to the formed abrasive substrate.

4. The apparatus (700) of claim 3, wherein:
the formed abrasive substrate includes a flexible adhesive substrate, the flexible adhesive substrate including a band of the binder precursor and the plurality of abrasive particles; and
the abrasive material dispenser (720) is configured to dispose the flexible adhesive substrate on the dispensing surface as the dispensing surface is rotated relative to the abrasive material dispenser.

5. The apparatus (700) of claim 1, wherein the abrasive material dispenser includes:
a binder precursor dispenser (750) to dispose the binder precursor onto the circular section of the dispensing surface; and
an abrasive particle feeder (720) (120) to dispose the plurality of abrasive particles at least partially within the binder precursor.

6. The apparatus (700) of claim 5, wherein:
the binder precursor dispenser (750a) is configured to dispose the binder precursor on a first radial region of the continuous single layer bonded abrasive wheel;
the binder precursor dispenser (750b) is configured to dispose an additional binder precursor on a second radial region of the continuous single layer bonded abrasive wheel, the second radial region different from the first radial region;
the abrasive particle feeder (720a) is configured to dispose the plurality of abrasive particles on the first radial region at least partially within the binder precursor;
the abrasive particle feeder (720b) is configured to dispose an additional plurality of abrasive particles in an additional plurality of predetermined positions on a second radial region within the additional binder precursor; and
wherein the apparatus is configured to rotate the wheel substrate such as to rotate the additional plurality of abrasive particles and additional binder precursor to form the continuous single layer bonded abrasive wheel.

7. The apparatus (100) of claim 1, further including a precursor leveling device (150), which is configured to level the disposed binder precursor (140).

8. A method of forming an abrasive wheel, the method comprising:
depositing a layer of an abrasive mixture onto a disc having a dispensing surface (710) from an abrasive mixture dispenser (720) at an abrasive mixture depositing location;
the method being **characterized in that** it further comprises:
leveling the layer of the abrasive mixture at a leveling location, using a leveling tool (730), such that the layer has a substantially smooth surface;
compacting the layer of the abrasive mixture, using a compacting tool (740) at a compacting location, such that a density of the layer of abrasive mixture increases;
applying a liquid material, from a liquid dispenser (750) at a liquid dispensing station, to the compacted layer of abrasive mixture;
allowing the layer of abrasive mixture and dispensed liquid to set at a setting station (760);
repeating the steps of depositing, leveling, compacting, applying and setting to form a multilayered abrasive wheel; and
wherein the dispensing surface is configured to rotate such that the deposited abrasive mixture moves between the depositing location, the leveling location, the compacting station, the liquid dispensing station and the setting station, and such that the mixture dispenser and the setting station remain fixed in place with respect to each other.

9. The method of claim 8, wherein the applied liquid material is a temporary binder configured to be burnt out during later processing of the abrasive wheel.

10. The method of claim 9, wherein the abrasive mixture comprises a permanent binder precursor, and wherein the permanent binder precursor is configured to be activated during later processing of the abrasive wheel.

11. The method of claim 8, wherein the applied liquid material is a reactive agent that reacts with a compound of the abrasive mixture.

12. The method of claim 8, wherein the liquid dispenser is a binder jet dispenser.

13. The method of claim 8, wherein the liquid material is applied in a pattern on the compacted layer of abrasive mixture such that at least a portion of the compacted layer receives no liquid material.

14. The method of claim 8, wherein the liquid material is applied in subsequent layers in a pattern such that a channel is formed through the abrasive wheel.

15. The method of claim 8, wherein the abrasive wheel is a plurality of discrete abrasive layer structures, and wherein a first discrete abrasive layer structure is different than a second discrete abrasive layer structure.

## Patentansprüche

1. Eine Einrichtung (700) zum Herstellen einer Schleifscheibe zum Ausbilden einer durchgehenden einschichtigen gebundenen Schleifscheibe, aufweisend:
ein Scheibensubstrat (710), das eine Abgabeoberfläche aufweist;
einen Schleifmaterialabgabemechanismus (720), der konfiguriert ist, um einen Bindemittelvorläufer auf einem kreisförmigen Abschnitt der Abgabeoberfläche anzuordnen und um eine Vielzahl von Schleifteilchen mindestens teilweise innerhalb des Bindemittelvorläufers anzuordnen; und
eine Drehvorrichtung, die konfiguriert ist, um die Abgabeoberfläche relativ zu dem Schleifmaterialabgabemechanismus zu drehen;
wobei die Einrichtung **dadurch gekennzeichnet ist, dass** sie ferner aufweist: einen Nivellierer (730), der konfiguriert ist, um die Schicht der Schleifmischung an einer Nivellierungsstelle derart zu nivellieren, dass die Schicht eine im Wesentlichen glatte Oberfläche aufweist;
ein Verdichtungswerkzeug (740), das konfiguriert ist, um die Schicht der Schleifmittelmischung an einer Verdichtungsstelle derart zu verdichten, dass eine Dichte der Schicht aus Schleifmittelmischung zunimmt;
einen Flüssigkeitsabgabemechanismus (750), der konfiguriert ist, um ein flüssiges Material aus einem Flüssigkeitsabgabemechanismus an einer Flüssigkeitsabgabestation auf die verdichtete Schicht aus Schleifmittelmischung aufzutragen;
eine Aushärtungsstation (760), die konfiguriert ist, um zu ermöglichen, dass die Schicht aus Schleifmittelmischung und abgegebener Flüssigkeit aushärtet.

2. Die Einrichtung (700) nach Anspruch 1, wobei die Drehvorrichtung konfiguriert ist, um die Abgabeoberfläche relativ zu dem Schleifmaterialabgabemechanismus zu drehen, während der Schleifmaterialabgabemechanismus (720) den Bindemittelvorläufer und die Vielzahl von Schleifteilchen anordnet, um die durchgehende einschichtige gebundene Schleifscheibe auszubilden.

3. Die Einrichtung (700) nach Anspruch 1, wobei der Schleifmaterialabgabemechanismus (720) konfiguriert ist, um ein ausgebildetes Schleifsubstrat anzuordnen, wobei die Vielzahl von Schleifteilchen an dem ausgebildeten Schleifsubstrat befestigt ist.

4. Die Einrichtung (700) nach Anspruch 3, wobei:
das ausgebildete Schleifsubstrat ein flexibles Klebesubstrat aufweist, wobei das flexible Klebesubstrat ein Band des Bindemittelvorläufers und die Vielzahl von Schleifteilchen aufweist; und
der Schleifmittelabgabemechanismus (720) konfiguriert ist, um das flexible Klebesubstrat auf der Abgabeoberfläche anzuordnen, wenn die Abgabeoberfläche relativ zu dem Schleifmittelabgabemechanismus gedreht wird.

5. Die Einrichtung (700) nach Anspruch 1, wobei der Schleifmaterialabgabemechanismus aufweist:
einen Bindemittelvorläuferabgabemechanismus (750), um den Bindemittelvorläufer auf dem kreisförmigen Abschnitt der Abgabeoberfläche anzuordnen; und
einen Schleifteilchenzuführer (720), um die Vielzahl von Schleifteilchen mindestens teilweise innerhalb des Bindemittelvorläufers anzuordnen.

6. Die Einrichtung (700) nach Anspruch 5, wobei:
der Bindemittelvorläuferabgabemechanismus (750a) konfiguriert ist, um den Bindemittelvorläufer auf einem ersten radialen Bereich der durchgehenden einschichtigen gebundenen Schleifscheibe anzuordnen;
der Bindemittelvorläuferabgabemechanismus (750b) konfiguriert ist, um einen zusätzlichen Bindemittelvorläufer auf einem zweiten radialen Bereich der durchgehenden einschichtigen gebundenen Schleifscheibe anzuordnen, wobei sich der zweite radiale Bereich von dem ersten radialen Bereich unterscheidet;
der Schleifteilchenzuführer (720a) konfiguriert ist, um die Vielzahl von Schleifteilchen auf dem ersten radialen Bereich mindestens teilweise innerhalb des Bindemittelvorläufers anzuordnen;
der Schleifteilchenzuführer (720b) konfiguriert ist, um eine zusätzliche Vielzahl von Schleifteilchen an einer zusätzlichen Vielzahl von zuvor bestimmten Positionen auf einem zweiten radialen Bereich innerhalb des zusätzlichen Bindemittelvorläufers anzuordnen; und
wobei die Einrichtung konfiguriert ist, um das Scheibensubstrat zu drehen, um die zusätzliche Vielzahl von Schleifteilchen und den zusätzlichen Bindemittelvorläufer zu drehen, um die durchgehende einschichtige gebundene Schleifscheibe auszubilden.

7. Die Einrichtung (100) nach Anspruch 1, ferner aufweisend eine Vorläufernivellierungsvorrichtung (150), die konfiguriert ist, um den angeordneten Bindemittelvorläufer (140) zu nivellieren.

8. Ein Verfahren zum Ausbilden einer Schleifscheibe, das Verfahren aufweisend:
Ablagern einer Schicht einer Schleifmischung auf eine Platte, die eine Abgabeoberfläche (710) aufweist, aus einem Schleifmischungsabgabemechanismus (720) an einer Schleifmischungsablagerungsstelle;
wobei das Verfahren **dadurch gekennzeichnet ist, dass** es ferner aufweist:
Nivellieren der Schicht der Schleifmischung an einer Nivellierungsstelle unter Verwendung eines Nivellierungswerkzeugs (730) derart, dass die Schicht eine im Wesentlichen glatte Oberfläche aufweist;
Verdichten der Schicht der Schleifmittelmischung unter Verwendung eines Verdichtungswerkzeugs (740) an einer Verdichtungsstelle derart, dass eine Dichte der Schicht aus Schleifmittelmischung zunimmt;
Auftragen eines flüssigen Materials aus einem Flüssigkeitsabgabemechanismus (750) an einer Flüssigkeitsabgabestation auf die verdichtete Schicht aus Schleifmittelmischung;
Ermöglichen, dass die Schicht aus Schleifmittelmischung und abgegebener Flüssigkeit an einer Aushärtungsstation (760) aushärtet;
Wiederholen der Schritte des Ablagerns, Nivellierens, Verdichtens, Auftragens und Aushärtens, um eine mehrschichtige Schleifscheibe auszubilden; und
wobei die Abgabeoberfläche konfiguriert ist, um sich derart zu drehen, dass die abgelagerte Schleifmischung zwischen der Ablagerungsstelle, der Nivellierungsstelle, der Verdichtungsstation, der Flüssigkeitsabgabestation und der Aushärtungsstation bewegt wird, und derart, dass der Mischungsabgabemechanismus und die Aushärtungsstation in Bezug zueinander lagefixiert bleiben.

9. Das Verfahren nach Anspruch 8, wobei das aufgetragene flüssige Material ein temporäres Bindemittel ist, das konfiguriert ist, um bei einer späteren Verarbeitung der Schleifscheibe auszubrennen.

10. Das Verfahren nach Anspruch 9, wobei die Schleifmischung einen permanenten Bindemittelvorläufer aufweist und wobei der permanente Bindemittelvorläufer konfiguriert ist, um während der späteren Verarbeitung der Schleifscheibe aktiviert zu werden.

11. Das Verfahren nach Anspruch 8, wobei das aufgetragene flüssige Material ein reaktives Mittel ist, das mit einer Verbindung der Schleifmischung reagiert.

12. Das Verfahren nach Anspruch 8, wobei der Flüssigkeitsabgabemechanismus ein Bindemittelstrahlabgabemechanismus ist.

13. Das Verfahren nach Anspruch 8, wobei das flüssige Material in einem Muster auf die verdichtete Schicht aus Schleifmittelmischung derart aufgetragen wird, dass mindestens ein Anteil der verdichteten Schicht kein flüssiges Material aufnimmt.

14. Das Verfahren nach Anspruch 8, wobei das flüssige Material in aufeinanderfolgenden Schichten in einem Muster derart aufgetragen wird, dass ein Kanal durch die Schleifscheibe ausgebildet wird.

15. Das Verfahren nach Anspruch 8, wobei die Schleifscheibe eine Vielzahl diskreter Schleifschichtstrukturen aufweist und wobei sich eine erste diskrete Schleifschichtstruktur von einer zweiten diskreten Schleifschichtstruktur unterscheidet.

## Revendications

1. Appareil de fabrication de meules abrasives (700) destiné à la formation d'une meule abrasive liée à une seule couche continue, comprenant :
un substrat de meule (710) ayant une surface de distribution ;
un distributeur de matériau abrasif (720) conçu pour répartir un précurseur de liant sur une section circulaire de la surface de distribution et pour répartir une pluralité de particules abrasives au moins partiellement au sein du précurseur de liant ; et
un dispositif de rotation conçu pour faire tourner la surface de distribution par rapport au distributeur de matériau abrasif ;
l'appareil étant **caractérisé en ce qu'**il comprend en outre : un niveleur (730) conçu pour niveler la couche du mélange abrasif au niveau d'un emplacement de nivellement, de sorte que la couche ait une surface sensiblement lisse ;
un outil de compactage (740) conçu pour compacter la couche du mélange abrasif au niveau d'un emplacement de compactage, de telle sorte qu'une densité de la couche de mélange abrasif augmente ;
un distributeur de liquide (750) conçu pour appliquer un matériau liquide provenant d'un distributeur de liquide au niveau d'une station de distribution de liquide, sur la couche compactée de mélange abrasif ;
une station de prise (760) conçue pour permettre à la couche de mélange abrasif et de liquide distribué de prendre.

2. Appareil (700) selon la revendication 1, dans lequel le dispositif de rotation est conçu pour faire tourner la surface de distribution par rapport au distributeur de matériau abrasif pendant que le distributeur de matériau abrasif (720) répartit le précurseur de liant et la pluralité de particules abrasives pour former la meule abrasive liée à une seule couche continue.

3. Appareil (700) selon la revendication 1, dans lequel le distributeur de matériau abrasif (720) est conçu pour répartir un substrat abrasif formé, la pluralité de particules abrasives étant fixées au substrat abrasif formé.

4. Appareil (700) selon la revendication 3, dans lequel :
le substrat abrasif formé comporte un substrat adhésif flexible, le substrat adhésif flexible comportant une bande du précurseur de liant et la pluralité de particules abrasives ; et
le distributeur de matériau abrasif (720) est conçu pour répartir le substrat adhésif flexible sur la surface de distribution lorsque la surface de distribution tourne par rapport au distributeur de matériau abrasif.

5. Appareil (700) selon la revendication 1, dans lequel le distributeur de matériau abrasif comporte :
un distributeur de précurseur de liant (750) pour répartir le précurseur de liant sur la section circulaire de la surface de distribution ; et
un dispositif d'alimentation en particules abrasives (720) pour répartir la pluralité de particules abrasives au moins partiellement au sein du précurseur de liant.

6. Appareil (700) selon la revendication 5, dans lequel :
le distributeur de précurseur de liant (750a) est conçu pour répartir le précurseur de liant sur une première région radiale de la meule abrasive liée à une seule couche continue ;
le distributeur de précurseur de liant (750b) est conçu pour répartir un précurseur de liant supplémentaire sur une seconde région radiale de la meule abrasive liée à une seule couche continue, la seconde région radiale étant différente de la première région radiale ;
le dispositif d'alimentation en particules abrasives (720a) est conçu pour répartir la pluralité de particules abrasives sur la première région radiale au moins partiellement au sein du précurseur de liant ;
le dispositif d'alimentation en particules abrasives (720b) est conçu pour répartir une pluralité supplémentaire de particules abrasives dans une pluralité supplémentaire de positions prédéterminées sur une seconde région radiale au sein du précurseur de liant supplémentaire ; et
dans lequel l'appareil est conçu pour faire tourner le substrat de meule de manière à faire tourner la pluralité supplémentaire de particules abrasives et
le précurseur de liant supplémentaire pour former la meule abrasive liée à une seule couche continue.

7. Appareil (100) selon la revendication 1, comportant en outre un dispositif de nivellement de précurseur (150), qui est conçu pour niveler le précurseur de liant réparti (140).

8. Procédé de formation d'une meule abrasive, le procédé comprenant :
le dépôt d'une couche d'un mélange abrasif sur un disque ayant une surface de distribution (710) à partir d'un distributeur de mélange abrasif (720) au niveau d'un emplacement de dépôt de mélange abrasif ;
le procédé étant **caractérisé en ce qu'**il comprend en outre :
le nivellement de la couche du mélange abrasif au niveau d'un emplacement de nivellement, à l'aide d'un outil de nivellement (730), de sorte que la couche ait une surface sensiblement lisse ;
le compactage de la couche du mélange abrasif, à l'aide d'un outil de compactage (740) au niveau d'un emplacement de compactage, de sorte qu'une densité de la couche de mélange abrasif augmente ;
l'application d'un matériau liquide, à partir d'un distributeur de liquide (750) au niveau d'une station de distribution de liquide, sur la couche compactée de mélange abrasif ;
le fait de permettre à la couche de mélange abrasif et de liquide distribué de prendre au niveau d'une station de prise (760) ;
la répétition des étapes de dépôt, de nivellement, de compactage, d'application et de prise pour former une meule abrasive multicouche ; et
dans lequel la surface de distribution est conçue pour tourner de telle sorte que le mélange abrasif déposé se déplace entre l'emplacement de dépôt, l'emplacement de nivellement, la station de compactage, la station de distribution de liquide et la station de prise, et de telle sorte que le distributeur de mélange et la station de prise restent en place l'un par rapport à l'autre.

9. Procédé selon la revendication 8, dans lequel le matériau liquide appliqué est un liant temporaire conçu pour être brûlé lors d'un traitement ultérieur de la meule abrasive.

10. Procédé selon la revendication 9, dans lequel le mélange abrasif comprend un précurseur de liant permanent, et dans lequel le précurseur de liant permanent est conçu pour être activé lors d'un traitement ultérieur de la meule abrasive.

11. Procédé selon la revendication 8, dans lequel le matériau liquide appliqué est un agent réactif qui réagit avec un composé du mélange abrasif.

12. Procédé selon la revendication 8, dans lequel le distributeur de liquide est un distributeur à jet de liant.

13. Procédé selon la revendication 8, dans lequel le matériau liquide est appliqué en un motif sur la couche compactée de mélange abrasif de telle sorte qu'au moins une partie de la couche compactée ne reçoit pas de matériau liquide.

14. Procédé selon la revendication 8, dans lequel le matériau liquide est appliqué en couches successives en un motif de sorte qu'un canal est formé à travers la meule abrasive.

15. Procédé selon la revendication 8, dans lequel la meule abrasive est une pluralité de structures de couches abrasives distinctes, et dans lequel une première structure de couche abrasive distincte est différente d'une seconde structure de couche abrasive distincte.
